# EUROPÄISCHE PATENTANMELDUNG

(11) **EP 2 937 527 A1**
(43) Veröffentlichungstag der Anmeldung: **28.10.2015**
(21) Anmeldenummer: 15000624.5
(22) Anmeldetag: 04.03.2015
(51) Int. Cl.: F01K 23/06

(54) **ORC-System Nassdampfregelung: Indirekte Regelung des Dampfgehaltes x<1 durch Füllstandsregelung**

(30) Priorität: 31.03.2014 DE 102014206012
(71) Anmelder: MTU FRIEDRICHSHAFEN GMBH, 88045 Friedrichshafen (DE)
(72) Erfinder: Waibel, Niklas, 88045 Friedrichshafen (DE); Stecher, Daniel, 88630 Pfulldendorf (DE); Niemeyer, Jens, 88045 Friedrichshafen (DE); Lorenz, Max, 88048 Friedrichshafen (DE); Horbach, Tim, 88048 Friedrichshafen (DE); Fast, Gerald, 88677 Markdorf (DE); Müller, Mathias, 88045 Friedrichshafen (DE)
(74) Vertreter: RRPS European Patent Attorneys

(57) **Zusammenfassung**

Es wird ein Verfahren zur Regelung eines Dampfgehalts eines in einem Verdampfer (7) eines Systems (5) zur Durchführung eines thermodynamischen Kreisprozesses erhitzten Arbeitsmediums mit folgenden Schritten vorgeschlagen: Durchführen einer Phasenseparation für das Arbeitsmedium stromabwärts des Verdampfers (7), wobei flüssige Anteile von dampfförmigen Anteilen des Arbeitsmediums getrennt werden; Einleiten der abgetrennten flüssigen Anteile in ein Reservoir (19); Ermitteln eines Füllstands in dem Reservoir (19), und Variieren einer Stellgröße zur Regelung des Dampfgehalts in Abhängigkeit von dem Füllstand.

## Beschreibung

Die Erfindung betrifft ein Verfahren zur Regelung eines Dampfgehalts eines in einem Verdampfer eines Systems zur Durchführung eines thermodynamischen Kreisprozesses erhitzten Arbeitsmediums gemäß Anspruch 1, eine Steuereinrichtung für ein entsprechendes System gemäß Anspruch 8, ein System für einen thermodynamischen Kreisprozess gemäß Anspruch 9, und eine Anordnung mit einer Brennkraftmaschine und einem System gemäß Anspruch 13.

Thermodynamische Kreisprozesse der hier angesprochenen Art sind bekannt. Dabei wird ein Arbeitsmedium durch eine Fördereinrichtung entlang eines Kreislaufs gefördert, wobei es in einem Verdampfer verdampft und einer Expansionseinrichtung zugeleitet wird. Das verdampfte Arbeitsmedium wird in der Expansionseinrichtung expandiert, wobei es mechanische Arbeit leistet. Das expandierte Arbeitsmedium wird in einem Kondensator gekühlt, kondensiert und anschließend von der Fördereinrichtung wiederum dem Verdampfer zugeführt. Ein typisches Beispiel eines solchen thermodynamischen Kreisprozesses ist der Clausius-Rankine-Kreisprozess. Diesem sehr ähnlich ist der organische Rankine-Kreisprozess (ORC), der sich aufgrund des niedrigeren Temperaturniveaus im Verdampfer dank der Verwendung eines organischen Arbeitsmediums besonders zur Abwärmenutzung beispielsweise in stationären Anwendungen wie Geothermie-Kraftwerken oder zur Nutzung der Abwärme einer Brennkraftmaschine eignet. Während in klassischen Dampfmaschinen und/oder Dampfkraftwerken typischerweise im Anschluss an die Verdampfung des Arbeitsmediums eine Überhitzung des Dampfs erfolgt, sodass in der Expansionseinrichtung trockener Dampf expandiert werden kann, hat sich insbesondere in Zusammenhang mit der Abwärmenutzung und mit ORC-Prozessen herausgestellt, dass ein Betrieb im Nassdampfgebiet vorteilhaft sein kann. Für eine stabile Durchführung des Prozesses ist es jedoch erforderlich, bei einem definierten Dampfgehalt zu arbeiten, diesen somit insbesondere zu regeln. Typischerweise erfolgt die Verdampfung des Arbeitsmediums bei konstantem Druck und konstanter Temperatur. Somit besteht keine eindeutige Korrelation zwischen diesen Messgrößen einerseits und dem Dampfgehalt andererseits. Die Dampfqualität ist damit nicht direkt über ohnehin vorhandene, rudimentäre Messtechnik erfassbar. Es ist möglich, kapazitive Feuchtemessungen zur Bestimmung des Dampfgehalts heranzuziehen. Dies ist allerdings aufwendig und teuer.

Der Erfindung liegt die Aufgabe zugrunde, ein Verfahren zur Regelung eines Dampfgehalts zu schaffen, welches einfach durchzuführen ist und zugleich eine stabile und genaue Regelung erlaubt. Der Erfindung liegt außerdem die Aufgabe zugrunde, eine Steuereinrichtung zur Durchführung eines solchen Verfahrens, ein System für einen thermodynamischen Kreisprozess, welches mittels eines solchen Verfahrens regelbar ist, und eine Anordnung einer Brennkraftmaschine und eines solchen Systems zu schaffen.

Die Aufgabe wird gelöst, indem ein Verfahren mit den Merkmalen des Anspruchs 1 geschaffen wird. Im Rahmen des Verfahrens wird eine Phasenseparation für das Arbeitsmedium stromabwärts des Verdampfers durchgeführt. Dabei werden flüssige Anteile von dampfförmigen Anteilen des Arbeitsmediums getrennt. Die abgetrennten, flüssigen Anteile des Arbeitsmediums werden in ein Reservoir eingeleitet, und ein Füllstand des Reservoirs wird ermittelt. In Abhängigkeit von dem Füllstand wird eine Stellgröße variiert, um den Dampfgehalt zu regeln. Demnach wird als Messgröße für die Prozessregelung ein Füllstand des abgetrennten, flüssigen Arbeitsmediums verwendet, was letztlich eine indirekte Regelung des Nassdampfgehalts bedeutet. Da abhängig von dem Dampfgehalt des im Verdampfer erzeugten Nassdampfs mehr oder weniger flüssige Anteile im Rahmen der Phasenseparation abgeschieden werden, kann durch Ermitteln des Füllstands in dem Reservoir auf den Dampfgehalt rückgeschlossen werden. Dieser kann somit sehr einfach und ohne aufwendige und teure Messtechnik ermittelt werden. Das Regelungsverfahren ermöglicht eine robuste Regelung insbesondere gegenüber veränderten Randbedingungen und/oder Störungen, wobei eine Reaktion des thermodynamischen Zustands des Prozesses stets zuverlässig innerhalb des Nassdampfgebiets stattfindet. Dies gilt vor allem für Laständerungen des Systems, die so jedenfalls nicht aus dem Nassdampfgebiet herausführen, sodass der Prozess insgesamt stabil ist. Auf diese Weise ist auch eine leichtere Teillastregelung möglich, und das Lastaufschaltverhalten des Systems ist verbessert. Dies ist insbesondere wichtig in Zusammenhang mit einer Nutzung von Abwärme einer Brennkraftmaschine, bei welcher sich der Betriebszustand des Systems in Abhängigkeit von dem Betriebszustand der Brennkraftmaschine ändert, weil die Abgastemperatur und damit die zur Verfügung stehende Wärme wiederum von dem Betriebszustand der Brennkraftmaschine abhängt. Je nach Nutzungsart der Brennkraftmaschine erfolgt dabei ein mehr oder weniger häufiger sowie mehr oder weniger unregelmäßiger Lastwechsel. In diesem Rahmen ermöglicht eine stabile Regelung des Dampfgehalts überhaupt erst eine Führung des Prozesses im Nassdampfgebiet, was wiederum eine Steigerung der Leistungsausbeute des Systems ermöglicht, insbesondere dann, wenn dieses als ORC-System ausgebildet ist.

Die Möglichkeit, das System beziehungsweise den Kreisprozess im Nassdampfgebiet zu betreiben, bringt weitere Vorteile in Hinblick auf eine Dauerhaltbarkeit und/oder eine Bauteilbelastung mit sich: Größere benetzte Flächen im Verdampfer verhindern inhomogene Temperaturverteilungen im Bereich der Verdampferwand, was die thermische Belastung des Materials des Verdampfers deutlich herabsetzt. Zugleich werden durch die Benetzung Öl-Verkokungen im Verdampfer vermieden. Hinzu kommt eine gesteigerte fluiddynamische Stabilität des Prozesses: Durch den Betrieb im Nassdampfgebiet erfolgt ein späterer Phasensprung innerhalb des Verdampfers, was ein geringeres Gasvolumen und eine geringere Strömungsgeschwindigkeit in dem Verdampfer bedeutet. Damit einher geht ein verringerter Druckverlust, wodurch letztlich auch eine Neigung zu fluiddynamischen Instabilitäten, insbesondere eine Neigung zur Ledinegg-Instabilität, abgeschwächt wird. Schließlich kann eine Umlaufmenge von zur Schmierung der Expansionseinrichtung vorgesehenem Schmiermittel innerhalb des Kreislaufs des Systems reduziert werden, weil das umlaufende Schmiermittel sich weniger in Totvolumina und an Wandungen des Systems absetzt. Es wird nämlich dort von den flüssigen Anteilen des Arbeitsmediums abgewaschen und im Kreislauf weitertransportiert. Durch die flüssigen Anteile ergeben sich also vorteilhafte Auswascheffekte, sodass letztlich bei reduzierter Gesamtschmiermittelmenge ein größerer Anteil an Schmiermittel permanent im Kreislauf gefördert werden kann.

Die vorteilhaften Auswirkungen der Nassdampfregelung in Hinblick auf die Lebensdauer der Systembauteile sind insbesondere für sogenannte Nonroad-Anwendungen, also Kopplungen des Systems mit einer Brennkraftmaschine zur Nutzung von deren Abwärme außerhalb des herkömmlichen Straßenverkehrs, beispielsweise im stationären Betrieb oder in Sonderfahrzeugen, wichtige Kriterien, sodass die Akzeptanz dieser Art der Abwärmenutzung durch das hier vorgeschlagene Verfahren deutlich steigt.

Die Phasenseparation für das Arbeitsmedium wird bevorzugt unmittelbar stromabwärts des Verdampfers, insbesondere stromaufwärts der Expansionseinrichtung, durchgeführt. Somit ist eine sehr genaue Regelung des Frischdampfgehalts am Verdampferaustritt möglich, wobei zugleich der Expansionseinrichtung möglichst von flüssigen Anteilen befreiter Sattdampf zugeführt wird.

Besonders bevorzugt wird eine Ausführungsform des Verfahrens, bei der ein ORC-Prozess durchgeführt wird. Bei dieser Art Prozess verwirklichen sich in besonderer Weise die Vorteile des Verfahrens, wobei der Prozess zugleich besonders geeignet ist zur Abwärmenutzung, insbesondere zur Nutzung der Abwärme einer Brennkraftmaschine. Als Arbeitsmedium wird bei einer bevorzugten Ausführungsform des Verfahrens Ethanol verwendet. Selbstverständlich sind auch andere organische Arbeitsmedien möglich.

Es ist möglich, dass der Füllstand in dem Reservoir intermittierend, also in Intervallen ermittelt wird. Dies kann gegebenenfalls für eine stabile Regelung des Dampfgehalts ausreichen. Alternativ ist bevorzugt vorgesehen, dass der Füllstand in dem Reservoir permanent ermittelt, insbesondere überwacht wird. Auf diese Weise kann die Regelung des Dampfgases besonders genau durchgeführt werden. Eine intermittierende Ermittlung führt dagegen zu einem weniger aufwendigen Verfahren und weist daher Kostenvorteile auf.

Es wird eine Ausführungsform des Verfahrens bevorzugt, die sich dadurch auszeichnet, dass ein Massenstrom des Arbeitsmediums in dem System in Abhängigkeit von dem Füllstand variiert wird. Der Massenstrom des Arbeitsmediums im System wird insofern als Stellgröße verwendet. Dies ermöglicht eine sehr effiziente und genaue Regelung des Dampfgehalts. Dabei zeigt sich, dass sich der Druck am Verdampferaustritt im Wesentlichen abhängig von dem Massenstrom einerseits und einer Drehzahl der Expansionseinrichtung andererseits einstellt. Erhöht sich der Wärmefluss in das System, beispielsweise weil eine mit dem System gekoppelte Brennkraftmaschine unter Last kommt und sich ihre Abgastemperatur erhöht, führt dies tendenziell zu einer Überhitzung des Frischdampfs, wobei zugleich die Temperatur an dem Verdampferaustritt steigt. Auch der Druck und/oder der Volumenstrom vor der Expansionseinrichtung steigt/steigen. Zugleich sinkt der Füllstand in dem Reservoir, nimmt zumindest mit verminderter Abscheidungsrate zu oder bleibt konstant. Der Füllstand sinkt vor allem dann, wenn kontinuierlich Arbeitsmedium aus dem Reservoir abgeführt wird. Jedenfalls verändert sich der Füllstand oder die Füllstandsänderung in dem Reservoir, sodass die Änderung des Dampfgehalts feststellbar ist. Der Massenstrom in dem System wird daraufhin erhöht, um die vermehrte Wärmemenge bei möglichst konstantem Dampfgehalt aufnehmen zu können. Sinkt umgekehrt die dem Verdampfer zugeführte Wärmemenge, beispielsweise weil die Brennkraftmaschine Last abwirft, wobei ihre Abgastemperatur sinkt, sinkt zugleich der Dampfgehalt. Dadurch wird vermehrt Flüssigkeit abgeschieden, und der Füllstand in dem Reservoir steigt. In diesem Fall wird der Massenstrom in dem System reduziert und damit auf die geringere angebotene Wärmemenge angepasst.

Im Rahmen des Verfahrens wird bevorzugt der Dampfgehalt am Verdampferaustritt geregelt. Insbesondere entspricht dies einer Nassdampfregelung am Verdampferaustritt. Der Dampfgehalt wird vorzugsweise auf einen konstanten, vorherbestimmten Wert geregelt. Es erfolgt also bevorzugt eine Konstantregelung des Dampfgehalts.

Es wird eine Ausführungsform des Verfahrens bevorzugt, die sich dadurch auszeichnet, dass eine Füllstandsänderung in dem Reservoir ermittelt wird, wobei der Massenstrom in Abhängigkeit der Füllstandsänderung variiert wird. Dies trägt der Erkenntnis Rechnung, dass der absolute Füllstand des Reservoirs typischerweise für sich genommen wenig über den Dampfgehalt aussagt. Demgegenüber zeigt eine Zunahme des Füllstands in dem Reservoir eine zunehmende Abscheidung von Flüssigkeitsanteilen und damit ein Absinken des Dampfgehalts, während eine Abnahme des Füllstands - bei kontinuierlicher Entfernung von Arbeitsmedium aus dem Reservoir - oder eine Reduzierung der Abscheidungsrate und gegebenenfalls auch ein konstanter Füllstand eine Zunahme des Dampfgehalts anzeigt/anzeigen. Insofern wird auch ein Verfahren bevorzugt, bei welchem eine Rate der Füllstandsänderung ermittelt und in Hinblick auf den Dampfgehalt oder eine Veränderung des Dampfgehalts ausgewertet wird. Hierdurch wird eine besonders genaue Regelung des Dampfgehalts möglich.

Es wird auch eine Ausführungsform des Verfahrens bevorzugt, die sich dadurch auszeichnet, dass der Massenstrom durch Variation einer Förderleistung einer Fördereinrichtung variiert wird, wobei die Fördereinrichtung zur Förderung des Arbeitsmediums in dem System verwendet wird. Auf diese Weise kann der Massenstrom direkt, sehr genau und einfach variiert werden. Als Fördereinrichtung wird vorzugsweise eine Pumpe verwendet, insbesondere eine Speisepumpe. Zur Variation des Massenstroms wird dabei bevorzugt eine Drehzahl der Pumpe, insbesondere der Speisepumpe, variiert.

Es wird auch eine Ausführungsform des Verfahrens bevorzugt, die sich dadurch auszeichnet, dass ein Druck und/oder eine Temperatur des Arbeitsmediums stromabwärts des Verdampfers ermittelt und zur Regelung des Dampfgehalts herangezogen wird/werden. Gemäß einer Ausführungsform des Verfahrens ist also vorgesehen, dass der Druck des Arbeitsmediums stromabwärts des Verdampfers, vorzugsweise unmittelbar stromabwärts des Verdampfers, insbesondere am Verdampferaustritt, erfasst und zur Regelung herangezogen wird. Alternativ oder zusätzlich ist vorgesehen, dass eine Temperatur des Arbeitsmediums stromabwärts des Verdampfers, insbesondere unmittelbar stromabwärts des Verdampfers, bevorzugt am Verdampferaustritt, erfasst und zur Regelung herangezogen wird. Durch die Ermittlung beziehungsweise Erfassung wenigstens einer dieser Messgrößen kann der thermodynamische Zustand des Arbeitsmediums stromabwärts des Verdampfers und stromaufwärts der Expansionseinrichtung, insbesondere am Verdampferaustritt, ermittelt werden. Dies lässt gegebenenfalls für sich genommen bereits Rückschlüsse auf den Dampfgehalt zu. Insbesondere ist so gegebenenfalls eine Überhitzung des Arbeitsmediums am Verdampferaustritt feststellbar. Jedenfalls kann die Genauigkeit der Regelung erhöht werden, wenn die Ermittlung des Füllstands, insbesondere die Ermittlung einer Füllstandsänderung, kombiniert wird mit der Auswertung des Drucks und/oder der Temperatur des Arbeitsmediums stromabwärts des Verdampfers. Alternativ oder zusätzlich ist es möglich, dass der Druck und/oder die Temperatur des Arbeitsmediums stromaufwärts einer Abscheideeinrichtung, die vorgesehen ist zur Trennung flüssiger Anteile des Arbeitsmediums von dampfförmigen Anteilen, ermittelt wird/werden. Bevorzugt wird/werden der Druck und/oder die Temperatur unmittelbar vor der Abscheideeinrichtung ermittelt. Alternativ oder zusätzlich ist es möglich, dass der Druck und/oder die Temperatur des Arbeitsmediums stromaufwärts einer Expansionseinrichtung des Systems ermittelt wird/werden, insbesondere unmittelbar vor der Expansionseinrichtung.

Es wird auch eine Ausführungsform des Verfahrens bevorzugt, die sich dadurch auszeichnet, dass die Dampfgehaltsregelung durch Betreiben des Systems auf oder jenseits der Sattdampfkurve des Mediums, und durch gezielte Abweichung von der Sattdampfkurve in das Nassdampfgebiet hinein, kalibriert wird. Dabei spricht der Begriff "jenseits der Sattdampfkurve" an, dass das Arbeitsmedium überhitzt wird, sodass trockener Frischdampf erzeugt wird. Vorzugsweise wird vor der Kalibrierung das Reservoir vollständig geleert, sodass keine Flüssigkeit in dem Reservoir vorliegt. Für die Kalibrierung wird vorzugsweise reines Arbeitsmedium ohne Schmiermittelanteile in dem Kreislauf des Systems verwendet. Das System wird dann zunächst auf oder jenseits der Sattdampfkurve betrieben, wobei sich keine flüssigen Anteile des Arbeitsmediums in dem Reservoir abscheiden. Durch gezieltes Abweichen des Betriebszustands des Systems von der Sattdampfkurve ins Nassdampfgebiet kann dann ermittelt werden, wie sich der Füllstand in dem Reservoir ändert, wenn sich der Dampfgehalt in definierter Weise ändert. Mit den so gewonnenen Daten des Füllstands und/oder der Füllstandsänderung in dem Reservoir in Abhängigkeit von dem absoluten und/oder sich ändernden Dampfgehalt wird dann vorzugsweise ein Kennfeld bedatet, welches später im Betrieb des Systems zur Regelung verwendet wird.

Alternativ ist es auch möglich, dass die Kalibration durchgeführt wird, wenn das System mit einem Gemisch aus Arbeitsmedium und Schmiermittel betrieben wird. Dabei ist es möglich, das sich im Betrieb des Systems in dem Reservoir abscheidende Schmiermittel in die Bedatung des Kennfelds mit einzubeziehen. Hierdurch kann die Genauigkeit der Kalibration und letztlich auch die Genauigkeit der Regelung erhöht werden.

Es wird eine Ausführungsform des Verfahrens bevorzugt, die sich dadurch auszeichnet, dass eine Entnahme von Flüssigkeit aus dem Reservoir in die Regelung des Dampfgehalts einbezogen wird. Eine Entnahme von Flüssigkeit aus dem Reservoir ist dabei zum einen vorgesehen, um einen Überlauf des Reservoirs zu vermeiden. Es wird also dem Kreislauf des Arbeitsmediums bevorzugt kontinuierlich Flüssigkeit aus dem Reservoir wieder zugeführt. Eine genaue Kenntnis dieser Flüssigkeitsentnahme ermöglicht eine exakte Regelung des Dampfgehalts in Abhängigkeit von dem Füllstand oder von einer Füllstandsänderung.

Es zeigt sich außerdem, dass zur Schmierung der Expansionseinrichtung typischerweise ein Schmiermittel verwendet wird, von dem zumindest Anteile gemeinsam mit dem Arbeitsmedium entlang des Kreislaufs gefördert werden. Das Schmiermittel wird dabei im Verdampfer nicht verdampft und somit im Rahmen der Phasenseparation in dem Reservoir gemeinsam mit den flüssigen Anteilen des Schmiermittels abgeschieden. Diese Anteile an abgeschiedenem Schmiermittel werden bevorzugt in die Dampfgehaltsregelung mit einbezogen. Dem Reservoir wird - vorzugsweise über eine Dosierpumpe - Schmiermittel beziehungsweise ein Gemisch aus Arbeitsmedium und Schmiermittel entnommen, welches über separat von dem Kreislauf vorgesehene Schmiermittelpfade der Expansionseinrichtung zugeführt wird. Dabei ist der Schmiermittelbedarf vom Betriebspunkt der Expansionseinrichtung, insbesondere von deren Drehzahl, und damit auch vom Betriebspunkt des Systems abhängig. Diese betriebspunktabhängige Entnahme von Flüssigkeit aus dem Reservoir ist vorzugsweise in einem Kennfeld hinterlegt und kann so zur Regelung des Dampfgehalts in Abhängigkeit von dem Füllstand herangezogen werden. Bei stationärem Betrieb, also konstanter Schmiermittel- oder Gemischentnahme aus dem Reservoir kann ohne weiteres in besonders einfacher Weise eine Änderung des Dampfgehalts über eine Änderung des Füllstands im Reservoir detektiert werden.

Die Aufgabe wird auch gelöst, indem eine Steuereinrichtung für ein System für einen thermodynamischen Kreisprozess mit den Merkmalen des Anspruchs 8 geschaffen wird. Diese ist eingerichtet zur Durchführung eines Verfahrens zur Regelung eines Dampfgehalts eines in einem Verdampfer des Systems erhitzten Arbeitsmediums, wobei die Steuereinrichtung eingerichtet ist zur Ermittlung eines Füllstands in einem stromabwärts eines Verdampfers und in Verbindung mit einer Abscheideeinrichtung zum Abscheiden flüssiger Anteile des Arbeitsmediums vorgesehenen Reservoir, wobei die Steuereinrichtung weiterhin eingerichtet ist zur Variation einer Stellgröße zur Regelung des Dampfgehalts in Abhängigkeit von dem Füllstand. Die Steuereinrichtung ist besonders bevorzugt eingerichtet zur Durchführung eines Verfahrens nach einer der zuvor beschriebenen Ausführungsformen. Damit verwirklichen sich in Zusammenhang mit der Steuereinrichtung die Vorteile, die bereits in Zusammenhang mit dem Verfahren erläutert wurden.

Es ist möglich, dass das Verfahren fest in eine elektronische Struktur, mithin in eine Hardware, der Steuereinrichtung implementiert ist. Alternativ ist bevorzugt vorgesehen, dass ein Computerprogrammprodukt in die Steuereinrichtung geladen ist, welches Anweisungen aufweist, aufgrund derer das Verfahren durchgeführt wird, wenn das Computerprogrammprodukt auf der Steuereinrichtung abläuft.

Die Steuereinrichtung ist bevorzugt eingerichtet zur Variation eines Massenstroms des Arbeitsmediums in dem System in Abhängigkeit von dem Füllstand, insbesondere zur Variation einer Förderleistung einer Fördereinrichtung in dem System.

Bevorzugt ist die Steuereinrichtung eingerichtet zur Ermittlung einer Füllstandsänderung, wobei sie weiterhin eingerichtet ist zur Variation des Massenstroms in Abhängigkeit von der Füllstandsänderung.

Weiterhin ist die Steuereinrichtung vorzugsweise eingerichtet zur Erfassung eines Drucks und/oder einer Temperatur des Arbeitsmediums stromabwärts des Verdampfers, insbesondere stromaufwärts einer Expansionseinrichtung, besonders bevorzugt am Verdampferaustritt. Die Steuereinrichtung ist eingerichtet, wenigstens einen dieser Messwerte zur Regelung des Dampfgehalts heranzuziehen.

Weiterhin ist die Steuereinrichtung vorzugsweise eingerichtet, um eine Entnahme von Flüssigkeit aus dem Reservoir in die Regelung des Dampfgehalts mit einzubeziehen.

Dabei weist die Steuereinrichtung entsprechende Schnittstellen zu entsprechenden Sensoren und Stelleinrichtungen auf.

Die Aufgabe wird auch gelöst, indem ein System für einen thermodynamischen Kreisprozess mit den Merkmalen des Anspruchs 9 geschaffen wird. Dieses zeichnet sich aus durch eine Steuereinrichtung nach einem der zuvor beschriebenen Ausführungsbeispiele. Damit verwirklichen sich in Zusammenhang mit dem System die Vorteile, die in Zusammenhang mit der Steuereinrichtung erläutert wurden und insbesondere die Vorteile, die bereits in Zusammenhang mit dem Verfahren erläutert wurden.

Das System weist bevorzugt - in Strömungsrichtung eines Arbeitsmediums in einem Kreislauf des Systems gesehen hintereinander angeordnet - einen Verdampfer, eine Abscheideeinrichtung, eingerichtet zur Trennung von flüssigen Anteilen des Arbeitsmediums von dampfförmigen Anteilen des Arbeitsmediums, eine Expansionseinrichtung, einen Kondensator und eine Fördereinrichtung für das Arbeitsmedium entlang des Kreislaufs auf. Das System ist vorzugsweise eingerichtet zur Durchführung eines organischen Rankine-Kreisprozesses (ORC), insbesondere mit Ethanol als Arbeitsmedium. Dies ermöglicht einen Einsatz des Systems zur Abwärmenutzung in besonders effizienter Weise.

Mit der Abscheideeinrichtung verbunden ist vorzugsweise ein Reservoir, in welches die in der Abscheideeinrichtung abgetrennten flüssigen Anteile eingeleitet werden. Das System weist vorzugsweise einen Füllstandsensor auf, mit dem ein Füllstand oder eine Füllstandsänderung in dem Reservoir erfassbar sind. Die Steuereinrichtung des Systems ist vorzugsweise mit dem Füllstandsensor zur Ermittlung, insbesondere zur Überwachung des Füllstands in dem Reservoir wirkverbunden. Weiterhin ist die Steuereinrichtung vorzugsweise wirkverbunden mit der Fördereinrichtung zur Variation von deren Förderleistung und damit insbesondere zur Variation eines Massenstroms in dem System.

Das System weist weiterhin bevorzugt einen Drucksensor und/oder einen Temperatursensor stromabwärts des Verdampfers, insbesondere an einem Verdampferaustritt, auf. Dabei ist die Steuereinrichtung vorzugsweise mit wenigstens einem dieser Sensoren wirkverbunden und eingerichtet zur Ermittlung eines thermodynamischen Zustands des Arbeitsmediums stromabwärts des Verdampfers, insbesondere am Verdampferaustritt. Die Steuereinrichtung ist weiterhin vorzugsweise eingerichtet zur Verwendung wenigstens eines dieser Messwerte zur Regelung des Dampfgehalts.

Es wird ein Ausführungsbeispiel des Systems bevorzugt, das sich dadurch auszeichnet, dass die Abscheideeinrichtung als Zyklonabscheider ausgebildet ist. Dabei wird der Arbeitsmedienstrom mithilfe von Leitblechen zu einer Kreisbewegung in dem Zyklonabscheider veranlasst, wodurch flüssige Anteile an die Leitbleche prallen und an diesen abfließen. Der Zyklonabscheider ermöglicht eine sehr effizient Phasentrennung bei zugleich äußerst geringem Druckverlust.

Es wird auch ein Ausführungsbeispiel des Systems bevorzugt, das sich dadurch auszeichnet, dass die Expansionseinrichtung als Schraubenexpander ausgebildet ist. Ein solcher Schraubenexpander hat sich in Hinblick auf die Leistungsausbeute insbesondere bei einem ORC-Prozess als günstig herausgestellt. Dies gilt ganz besonders für ORC-Systeme, die ohne Überhitzung beziehungsweise im Nassdampfgebiet betrieben werden. Ein Schraubenexpander ist eine schadraumfreie Verdrängermaschine, deren Arbeitskammern durch Zahnzwischenräume zweier schräg verzahnter Zahnräder, die auch als Rotoren bezeichnet werden, gebildet werden. Dabei greifen die Zähne der Rotoren, die bevorzugt spiralförmig an deren in axialer Richtung langgestreckten Umfangsflächen verlaufen, jeweils in die Zahnzwischenräume des jeweils anderen Rotors ein. Bei einer Relativdrehung der beiden Rotoren zueinander bilden sich auf diese Weise Arbeitskammern mit veränderlichem Volumen aus, in denen das Arbeitsmedium auf seinem Weg durch den Schraubenexpander von einer Einlassöffnung zu einer Auslassöffnung expandiert.

Alternativ ist es auch möglich, dass die Expansionseinrichtung als Strömungsmaschine, insbesondere als Turbine, oder als anders ausgebildete Verdrängermaschine, oder als volumetrisch arbeitende Expansionseinrichtung, insbesondere als Hubkolbenmaschine, Scroll-Expander, Flügelzellenmaschine oder Roots-Expander ausgebildet ist.

Schließlich wird auch ein Ausführungsbeispiel des Systems bevorzugt, das sich dadurch auszeichnet, dass es eingerichtet ist zur Nutzung der Abwärme einer Brennkraftmaschine. Dies ermöglicht einen vorteilhaften Einsatz des Systems zur mobilen oder stationären Abwärmenutzung und zur Erhöhung der Effizienz einer Brennkraftmaschine.

Die Aufgabe wird schließlich auch gelöst, indem eine Anordnung mit den Merkmalen des Anspruchs 13 geschaffen wird. Diese weist eine Brennkraftmaschine sowie ein System nach einem der zuvor beschriebenen Ausführungsbeispiele auf. Dabei ist das System mit der Brennkraftmaschine zur Nutzung von deren Abwärme wirkverbunden. Dabei ist es möglich, dass dem System Abgas der Brennkraftmaschine zur Nutzung der darin enthaltenen Abwärme zuführbar ist. Alternativ oder zusätzlich ist vorgesehen, dass dem System Kühlmittel der Brennkraftmaschine zur Nutzung der darin enthaltenen Abwärme zuführbar ist. Auf diese Weise lässt sich die Gesamteffizienz der Brennkraftmaschine steigern und deren Abwärme einer sinnvollen Nutzung zuführen. Es ist möglich, dass die in dem System geleistete mechanische Arbeit unmittelbar auf eine Kurbelwelle der Brennkraftmaschine zurückgeführt wird, um die Brennkraftmaschine zu unterstützen. Alternativ oder zusätzlich kann die mechanische Arbeit anderweitig direkt mechanisch verwendet werden. Weiterhin ist es möglich, dass mit der Expansionseinrichtung ein Generator wirkverbunden ist, sodass die mechanische Arbeit in elektrische Energie umgewandelt wird. Diese kann - beispielsweise über einen Elektromotor - wiederum der Kurbelwelle der Brennkraftmaschine zur Unterstützung zugeführt werden. Alternativ oder zusätzlich kann die so erzeugte elektrische Energie anderweitig genutzt werden, beispielsweise in einem Bordnetz, oder sie kann in ein Stromnetz eingespeist werden.

Die Brennkraftmaschine der Anordnung ist vorzugsweise als Hubkolbenmotor ausgebildet. Bei einem bevorzugten Ausführungsbeispiel dient die Brennkraftmaschine dem Antrieb insbesondere schwerer Land- oder Wasserfahrzeuge, beispielsweise von Minenfahrzeugen, Zügen, wobei die Brennkraftmaschine in einer Lokomotive oder einem Triebwagen eingesetzt wird, oder von Schiffen. Auch ein Einsatz der Brennkraftmaschine zum Antrieb eines der Verteidigung dienenden Fahrzeugs, beispielsweise eines Panzers, ist möglich. Ein Ausführungsbeispiel der Brennkraftmaschine wird vorzugsweise auch stationär, beispielsweise zur stationären Energieversorgung im Notstrombetrieb, Dauerlastbetrieb oder Spitzenlastbetrieb eingesetzt, wobei die Brennkraftmaschine in diesem Fall vorzugsweise einen Generator antreibt. Auch eine stationäre Anwendung der Brennkraftmaschine zum Antrieb von Hilfsaggregaten, beispielsweise von Feuerlöschpumpen auf Bohrinseln, ist möglich. Weiterhin ist eine Anwendung der Brennkraftmaschine im Bereich der Förderung fossiler Roh- und insbesondere Brennstoffe, beispielswiese Öl und/oder Gas, möglich. Auch eine Verwendung der Brennkraftmaschine im industriellen Bereich oder im Konstruktionsbereich, beispielsweise in einer Konstruktions- oder Baumaschine, zum Beispiel in einem Kran oder einem Bagger, ist möglich. Die Brennkraftmaschine ist vorzugsweise als Dieselmotor, als Benzinmotor, als Gasmotor zum Betrieb mit Erdgas, Biogas, Sondergas oder einem anderen geeigneten Gas, ausgebildet. Insbesondere wenn die Brennkraftmaschine als Gasmotor ausgebildet ist, ist sie für den Einsatz in einem Blockheizkraftwerk zur stationären Energieerzeugung geeignet.

Ein besonders bevorzugtes Ausführungsbeispiel der Anordnung ist vorgesehen zur marinen Anwendung, insbesondere an Bord eines Fährschiffs, wobei die Brennkraftmaschine vorzugsweise zum Antrieb des Schiffs vorgesehen ist. Mithilfe des Systems ist elektrische Energie für ein Bordnetz des Schiffs gewinnbar.

Die Beschreibung des Verfahrens einerseits sowie der Steuereinrichtung, des Systems und der Anordnung andererseits sind komplementär zueinander zu verstehen. Merkmale der Steuereinrichtung, des Systems und/oder der Anordnung, die explizit oder implizit in Zusammenhang mit dem Verfahren beschrieben wurden, sind bevorzugt einzeln oder miteinander kombiniert Merkmale eines bevorzugten Ausführungsbeispiels der Steuereinrichtung, des Systems und/oder der Anordnung. Verfahrensschritte, die explizit oder implizit in Zusammenhang mit der Steuereinrichtung, dem System und/oder der Anordnung erläutert wurden, sind bevorzugt einzeln oder miteinander kombiniert Schritte eine bevorzugten Ausführungsform des Verfahrens. Das Verfahren zeichnet sich vorzugsweise durch wenigstens einen Verfahrensschritt aus, der durch wenigstens ein Merkmal der Steuereinrichtung, des Systems und/oder der Anordnung bedingt ist. Die Steuereinrichtung, das System und/oder die Anordnung zeichnen sich bevorzugt durch wenigstens ein Merkmal aus, welches durch wenigstens einen Verfahrensschritt des Verfahrens bedingt ist.

Die Erfindung wird im Folgenden anhand der Zeichnung näher erläutert. Dabei zeigen:
- Fig. 1: eine schematische Darstellung eines Ausführungsbeispiels einer Anordnung mit einer Brennkraftmaschine und einem System zur Durchführung eines thermodynamischen Kreisprozesses, und
- Fig. 2: eine schematische Darstellung einer Ausführungsform des Verfahrens in Form eines Regelkreises.

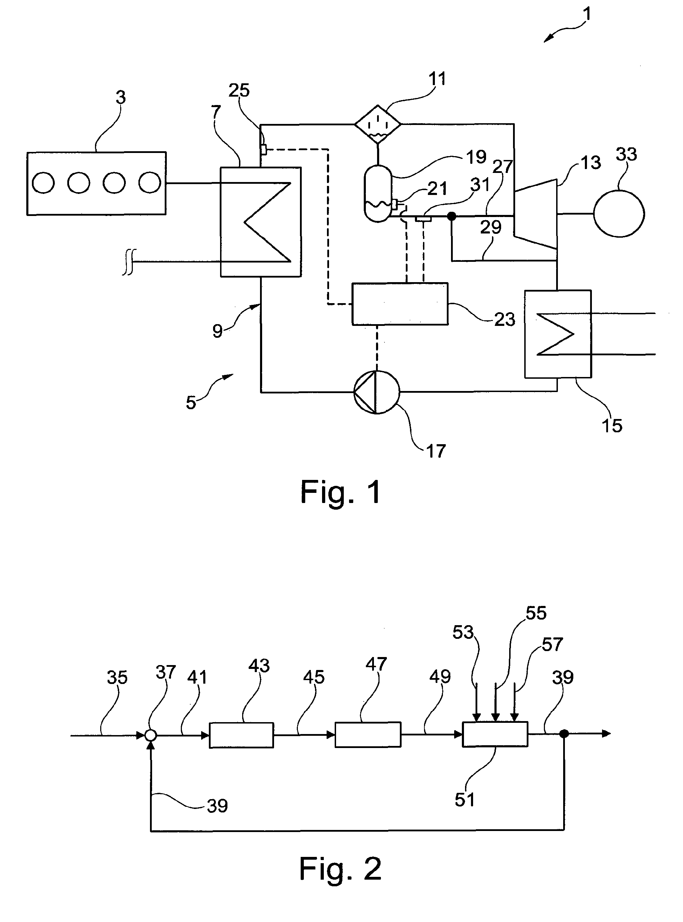

Fig. 1 zeigt eine schematische Darstellung eines Ausführungsbeispiels einer Anordnung 1, welche eine Brennkraftmaschine 3 und ein System 5 für einen thermodynamischen Kreisprozess aufweist. Das System 5 ist hier eingerichtet zur Durchführung eines organischen Rankine-Kreisprozesses und zur Nutzung von Abwärme der Brennkraftmaschine 3. Hierzu ist einem Verdampfer 7 des Systems 5 Abwärme der Brennkraftmaschine 3 zuführbar, insbesondere von dem Abgas und/oder von einem Kühlmittel der Brennkraftmaschine 3 umfasste Abwärme.

Das System 5 weist einen Kreislauf 9 für ein Arbeitsmedium, vorzugsweise Ethanol, auf, wobei - in Strömungsrichtung des Arbeitsmediums gesehen - entlang des Kreislaufs 9 stromabwärts des Verdampfers 7 eine Abscheideeinrichtung 11, eine Expansionseinrichtung 13, ein Kondensator 15 und eine Fördereinrichtung 17 zur Förderung des Arbeitsmediums entlang des Kreislaufs 9 vorgesehen sind. Die Abscheideeinrichtung 11 ist bevorzugt als Zyklonabscheider ausgebildet. Die Expansionseinrichtung 13 ist bevorzugt als Schraubenexpander ausgebildet. Die Fördereinrichtung 17 ist vorzugsweise als Speisepumpe mit variabler Drehzahl ausgebildet. Jedenfalls weist die Fördereinrichtung 17 eine variable Förderleistung auf, wobei durch Variation der Förderleistung der Fördereinrichtung 17 ein Massenstrom des Arbeitsmediums in dem System 5 einstellbar ist.

Das System 5 ist eingerichtet für einen Betrieb des thermodynamischen Kreisprozesses, insbesondere des ORC-Prozesses, im Nassdampfgebiet, sodass stromabwärts des Verdampfers 7, insbesondere an dem Verdampferaustritt, Nassdampf mit flüssigen und dampfförmigen Anteilen des Arbeitsmediums vorliegt. Um einen stabilen Kreisprozess zu gewährleisten, weist das System 5 eine Regelung für den Dampfgehalt des Arbeitsmediums stromabwärts des Verdampfers 7 und stromaufwärts der Expansionseinrichtung 13, insbesondere im Bereich des Verdampferaustritts, auf. In der Abscheideeinrichtung 11 werden flüssige Anteile des Arbeitsmediums von den dampfförmigen Anteilen getrennt, wobei die abgetrennten flüssigen Anteile in ein Reservoir 19 eingeleitet werden. Vorzugsweise wird in der Abscheideeinrichtung 11 auch Schmiermittel abgeschieden, welches zur Schmierung der Expansionseinrichtung 13 vorgesehen ist. Dieses Schmiermittel wird zumindest teilweise zusammen mit dem Arbeitsmedium entlang des Kreislaufs 9 gefördert, jedoch in dem Verdampfer 7 nicht verdampft. Es liegt also stromabwärts des Verdampfers in flüssiger Form vor und wird daher in der Abscheideeinrichtung 11 mit abgeschieden. Dabei gelangt es zusammen mit den flüssigen Anteilen des Schmiermittels in das Reservoir 19.

Das System 5 weist einen Füllstandsensor 21 auf, mit dem ein Füllstand und insbesondere eine Füllstandsänderung in dem Reservoir 19 erfassbar ist. Um den Dampfgehalt des Arbeitsmediums stromabwärts des Verdampfers 7 zu regeln, ist das System 5 eingerichtet zur Variation einer Stellgröße in Abhängigkeit von dem durch den Füllstandsensor 21 erfassten Füllstand, insbesondere in Abhängigkeit von einer durch den Füllstandsensor 21 erfassten Füllstandsänderung.

Hierzu ist eine Steuereinrichtung 23 vorgesehen, die mit dem Füllstandsensor 21 zur Ermittlung, insbesondere zur Überwachung des Füllstands, insbesondere einer Füllstandsänderung, wirkverbunden ist. Die Steuereinrichtung 23 ist eingerichtet zur Variation eines Massenstroms des Arbeitsmediums in dem System 5 in Abhängigkeit von dem Füllstand, insbesondere der Füllstandsänderung. Hierzu ist sie bei dem dargestellten Ausführungsbeispiel mit der Fördereinrichtung 17 wirkverbunden, um deren Förderleistung und damit den Massenstrom des Arbeitsmediums entlang des Kreislaufs 9 in Abhängigkeit von dem erfassten Signal des Füllstandsensors 21 zu variieren.

Wird beispielsweise dem Verdampfer 7 mehr Wärme von der Brennkraftmaschine 3 zugeführt, steigt der Dampfgehalt am Verdampferaustritt, sodass weniger flüssige Anteile des Arbeitsmediums in der Abscheideeinrichtung 11 abgeschieden und damit in das Reservoir 19 eingeleitet werden. Somit steigt der Füllstand langsamer, ändert sich nicht mehr, oder sinkt sogar. Dies wird von der Steuereinrichtung 23 erfasst und als Zunahme des Dampfgehalts quantitativ ausgewertet. Die Fördereinrichtung 17 wird von der Steuereinrichtung 23 zu erhöhter Förderleistung angesteuert, sodass der Massenstrom in dem Kreislauf 9 steigt. Damit kann die dem Verdampfer 7 zuführte, erhöhte Wärmemenge bei zumindest annährend konstantem Dampfgehalt von dem System 5 aufgenommen werden.

Sinkt umgekehrt die dem Verdampfer 7 von der Brennkraftmaschine 3 zugeführte Wärmemenge, führt dies zu einer geringeren Verdampfung und damit zu einem Ansteigen der flüssigen Anteile des Arbeitsmediums, wobei in der Abscheideeinrichtung 11 vermehrt flüssige Anteile abgeschieden werden, welche dem Reservoir 19 zugeführt werden. Somit steigt der Füllstand in dem Reservoir 19, was wiederum durch den Füllstandsensor 21 erkannt und von der Steuereinrichtung 23 als Abnahme des Dampfgehalts quantitativ ausgewertet wird. Die Steuereinrichtung 23 steuert dann die Fördereinrichtung 17 derart an, dass deren Förderleistung reduziert wird, sodass der Massenstrom in dem Kreislauf 9 sinkt. Er wird somit auf die geringere, zur Verfügung stehende Wärmemenge in dem Verdampfer 7 angepasst, wodurch der Dampfgehalt wiederum zumindest annährend konstant gehalten werden kann. Die Steuereinrichtung 23 ist dabei vorzugsweise eingerichtet zur Konstantregelung des Dampfgehalts am Verdampferaustritt. Weiterhin ist die Steuereinrichtung 23 bevorzugt ausgebildet zur Ansteuerung der Drehzahl der als Speisepumpe ausgebildeten Fördereinrichtung 17.

Vorzugsweise ist stromabwärts des Verdampfers 7, insbesondere am Verdampferaustritt, eine Sensoreinrichtung 25 zur Erfassung eines Drucks und/oder einer Temperatur des Arbeitsmediums vorgesehen. Die Steuereinrichtung 23 ist mit dieser Sensoreinrichtung 25 vorzugsweise wirkverbunden und eingerichtet zur Ermittlung eines thermodynamischen Zusands des Arbeitsmediums am Verdampferaustritt auf der Grundlage des wenigstens einen Messwerts der Steuereinrichtung 25. Diese Information wird vorzugsweise in die Regelung des Dampfgehalts mit einbezogen, wodurch die Genauigkeit der Regelung gesteigert wird.

Es zeigt sich, dass das in dem Reservoir abgeschiedene Schmiermittel vorzugsweise der Expansionseinrichtung 13 zur Schmierung über einen hier nur schematisch angedeuteten Schmiermittelpfad 27 zugeführt wird. Alternativ oder zusätzlich wird vorzugsweise in dem Reservoir 19 enthaltene Flüssigkeit entlang eines Entleerungspfads 29 vorzugsweise stromabwärts der Expansionseinrichtung und stromaufwärts des Kondensators 15 in den Kreislauf 9 zurückgeführt. Diese Option wird vorzugsweise insbesondere genutzt, um ein Überlaufen des Reservoirs 19 zu verhindern. Außerdem ist es auf diese Weise möglich, eine hohe Schmiermittelkonzentration - und damit einen geringen Anteil an Arbeitsmittel - in dem Reservoir sicherzustellen, das insoweit als Schmiermittelbehälter fungiert.

Jedenfalls zeigt sich, dass dem Reservoir 19 bevorzugt kontinuierlich und/oder in regelmäßigen Abständen Flüssigkeit entnommen wird. Dabei ist insbesondere die Entnahme von Schmiermittel zur Schmierung der Expansionseinrichtung 13 vom Betriebszustand des Systems 5, insbesondere von der Drehzahl der Expansionseinrichtung abhängig. In der Steuereinrichtung 23 ist vorzugsweise wenigstens ein Kennfeld hinterlegt, in welchem die betriebspunktabhängige Entnahme von Flüssigkeit aus dem Reservoir 19 bedatet ist. Alternativ oder zusätzlich ist es möglich, dass das System 5 einen Entnahmesensor 31, vorzugsweise in Form eines Durchflusssensors, aufweist, mit welchem eine Entnahme von Flüssigkeit aus dem Reservoir 19 direkt erfassbar ist. In diesem Fall ist die Steuereinrichtung 23 mit dem Entnahmesensor 31 zur Erfassung der Entnahme von Flüssigkeit aus dem Reservoir 19 wirkverbunden. Jedenfalls wird die Entnahme von Flüssigkeit aus dem Reservoir bevorzugt in die Regelung des Dampfgehalts mit einbezogen, was deren Genauigkeit nochmals steigert.

Es zeigt sich noch, dass bei dem hier dargestellten Ausführungsbeispiel des Systems 5 die Expansionseinrichtung 13 mit einem Generator 33 wirkverbunden ist, sodass die in der Expansionseinrichtung 13 durch das Arbeitsmedium geleistete mechanische Arbeit mittels des Generators 33 in elektrische Energie wandelbar ist.

Die Anordnung 1 ist besonders bevorzugt zur marinen Anwendung, insbesondere in einem Fährschiff, vorgesehen. Dabei dient die Brennkraftmaschine 3 vorzugsweise einem Antrieb des Schiffs, insbesondere des Fährschiffs. Die in dem Generator 33 erzeugte elektrische Leistung wird besonders bevorzugt einem Bordnetz des Schiffs, insbesondere des Fährschiffs, zugeführt beziehungsweise in dieses eingespeist. Es sind aber auch andere Verwendungen der Anwendung 1, insbesondere stationäre Anwendungen oder andere mobile Anwendungen - wie zuvor in Zusammenhang mit der Brennkraftmaschine beschrieben - möglich.

Fig. 2 zeigt eine schematische Darstellung einer Ausführungsform des Verfahrens in Form eines Regelkreises. Die hier schematisch dargestellte Regelung wird bevorzugt vollständig in der Steuereinrichtung 23 durchgeführt. Dabei geht in den Regelkreis eine Sollvorgabe 35 für den Dampfgehalt des Arbeitsmediums stromabwärts des Verdampfers 7, insbesondere am Verdampferaustritt, ein. Diese wird in einem Vergleichsglied 37 mit einem Ist-Wert 39 des Dampfgehalts verglichen, woraus eine Regelabweichung 41 resultiert. Diese geht in eine Regeleinrichtung 43 ein, welche hieraus eine Stellgröße 45, insbesondere in Form eines Ansteuerungssignals für die Fördereinrichtung 17 zur Vorgabe von deren Förderleistung berechnet. Es ist möglich, dass die Förderleistung der Fördereinrichtung 17 lediglich anhand der Stellgröße 45 gesteuert wird. Alternativ und bevorzugt ist es aber möglich, dass die Förderleistung der Fördereinrichtung 17, insbesondere die Drehzahl der Speisepumpe, mithilfe einer unterlagerten Regelung auf die Stellgröße 45 geregelt wird. Dies erhöht die Genauigkeit des Verfahrens.

Die Stellgröße 45 wirkt auf eine Regelstrecke 47, welche insbesondere die Fördereinrichtung 17, den Verdampfer 7, die Abscheideeinrichtung 11 und das Reservoir 19 umfasst. Aufgrund einer Änderung der Stellgröße 45 ändert sich durch Variation der Förderleistung der Fördereinrichtung 17 der Massenstrom des Arbeitsmediums in dem Kreislauf 9, was sich auf den Dampfgehalt des Arbeitsmediums am Verdampferaustritt auswirkt und damit auch auf den Füllstand des Reservoirs 19, welcher durch den Füllstandsensor 21 detektierbar ist. Aus der Regelstrecke 47 resultiert somit letztlich eine Messgröße 49, die den vorzugsweise mithilfe des Füllstandsensors 21 ermittelten Füllstand oder eine Füllstandsänderung darstellt. Die Messgröße 49 ist also insbesondere ein Messsignal des Füllstandsensors 21. Die Messgröße 49 geht ein in ein Rechenglied 51, welches eingerichtet ist zur Berechnung eines Dampfgehalts eines Arbeitsmediums stromabwärts des Verdampfers 7, insbesondere am Verdampferaustritt, in Abhängigkeit von der Messgröße 49. Dementsprechend resultiert aus dem Rechenglied 51 schließlich der Ist-Wert 39 für den Dampfgehalt, welcher wiederum zu dem Vergleichsglied 37 zurückgeführt wird.

Vorzugsweise gehen in das Rechenglied 51 weitere Größen ein. Bevorzugt ist vorgesehen, dass hier ein Druck 53 des Arbeitsmediums stromabwärts des Verdampfers 7, insbesondere am Verdampferaustritt, eingeht. Alternativ oder zusätzlich ist vorgesehen, dass hier eine Temperatur 55 des Arbeitsmediums stromabwärts des Verdampfers 7, insbesondere am Verdampferaustritt, eingeht. Mithilfe wenigstens einer dieser Messgrößen ist ein thermodynamischer Zustand des Arbeitsmediums an der bezeichneten Stelle erfassbar, wodurch ebenfalls - und gegebenenfalls komplementär zu der Messgröße 49 - auf den Dampfgehalt des Arbeitsmediums rückgeschlossen werden kann. Hierdurch wird die Genauigkeit der Regelung erhöht.

Alternativ oder zusätzlich geht in das Rechenglied 41 vorzugsweise eine Entnahme 57 von Flüssigkeit aus dem Reservoir 19 ein, wobei die Entnahme 57 aus einem Kennfeld ausgelesen und/oder mithilfe des Entnahmesensors 31 gemessen wird. Dies erhöht die Genauigkeit des Verfahrens zusätzlich.

Insgesamt zeigt sich so, dass mithilfe des Verfahrens eine sehr stabile, genaue und kostengünstige Regelung des Dampfgehalts möglich ist, was letztlich erst einen wirtschaftlichen Betrieb des Systems im Nassdampfgebiet mit allen damit verbundenen Vorteilen ermöglicht.

## Patentansprüche

1. Verfahren zur Regelung eines Dampfgehalts eines in einem Verdampfer (7) eines Systems (5) zur Durchführung eines thermodynamischen Kreisprozesses erhitzten Arbeitsmediums, mit folgenden Schritten:
- Durchführen einer Phasenseparation für das Arbeitsmedium stromabwärts des Verdampfers (7), wobei flüssige Anteile von dampfförmigen Anteilen des Arbeitsmediums getrennt werden;
- Einleiten der abgetrennten flüssigen Anteile in ein Reservoir (19);
- Ermitteln eines Füllstands in dem Reservoir (19), und
- Variieren einer Stellgröße zur Regelung des Dampfgehalts in Abhängigkeit von dem Füllstand.

2. Verfahren nach Anspruch 1, **dadurch gekennzeichnet, dass** ein Massenstrom des Arbeitsmediums in dem System (5) in Abhängigkeit von dem Füllstand variiert wird.

3. Verfahren nach einem der vorhergehenden Ansprüche, **dadurch gekennzeichnet, dass** eine Füllstandsänderung in dem Reservoir (19) ermittelt wird, wobei der Massenstrom in Abhängigkeit von der Füllstandsänderung variiert wird.

4. Verfahren nach einem der vorhergehenden Ansprüche, **dadurch gekennzeichnet, dass** der Massenstrom durch Variation einer Förderleistung einer Fördereinrichtung (17) variiert wird, wobei die Fördereinrichtung (17) zur Förderung des Arbeitsmediums in dem System (5) verwendet wird.

5. Verfahren nach einem der vorhergehenden Ansprüche, **dadurch gekennzeichnet, dass** ein Druck (53) und/oder eine Temperatur (55) des Arbeitsmediums stromabwärts des Verdampfers (7) und/oder stromaufwärts einer Abscheideeinrichtung (11) und/oder stromaufwärts einer Expansionseinrichtung (13) des Systems (5) ermittelt und zur Regelung des Dampfgehalts herangezogen wird/werden.

6. Verfahren nach einem der vorhergehenden Ansprüche, **dadurch gekennzeichnet, dass** die Dampfgehaltsregelung durch Betreiben des Systems (5) auf oder jenseits der Sattdampfkurve des Arbeitsmediums, und durch gezielte Abweichung von der Sattdampfkurve in das Nassdampfgebiet hinein, kalibriert wird.

7. Verfahren nach einem der vorhergehenden Ansprüche, **dadurch gekennzeichnet, dass** eine Entnahme von Flüssigkeit aus dem Reservoir (19) in die Dampfgehaltsregelung einbezogen wird.

8. Steuereinrichtung (23) für ein System (5) für einen thermodynamischen Kreisprozess, wobei die Steuereinrichtung eingerichtet ist zur Durchführung eines Verfahrens zur Regelung eines Dampfgehalts eines in einem Verdampfer (7) des Systems (5) erhitzten Arbeitsmediums, insbesondere zur Durchführung eines Verfahrens nach einem der Ansprüche 1 bis 7, wobei die Steuereinrichtung (23) eingerichtet ist zur Ermittlung eines Füllstands in einem stromabwärts des Verdampfers (7) angeordneten und mit einer Abscheideeinrichtung (11) verbundenen Reservoir (19), und zur Variation einer Stellgröße zur Regelung des Dampfgehalts in Abhängigkeit von dem Füllstand.

9. System (5) für einen thermodynamischen Kreisprozess, **gekennzeichnet durch** eine Steuereinrichtung (23) nach Anspruch 8.

10. System (5) nach Anspruch 9, **dadurch gekennzeichnet, dass** das System (5) - in Strömungsrichtung eines Arbeitsmediums entlang eines Kreislaufs (9) gesehen - hintereinander einen Verdampfer (7), eine Abscheideeinrichtung (11), eine Expansionseinrichtung (13), einen Kondensator (15), und eine Fördereinrichtung (17) für das Arbeitsmedium aufweist, wobei vorzugsweise mit der Abscheideeinrichtung (11) ein Reservoir (19) zur Einleitung von in der Abscheideeinrichtung (11) abgetrennten flüssigen Anteilen des Arbeitsmediums verbunden ist.

11. System nach einem der Ansprüche 9 und 10, **dadurch gekennzeichnet, dass** die Expansionseinrichtung (13) als Schraubenexpander ausgebildet ist.

12. System (5) nach einem der Ansprüche 9 bis 11, **dadurch gekennzeichnet, dass** das System (5) zur Nutzung von Abwärme einer Brennkraftmaschine (3) eingerichtet ist.

13. Anordnung (1) aufweisend eine Brennkraftmaschine (3) und ein System (5) für einen thermodynamischen Kreisprozess, **dadurch gekennzeichnet, dass** das System (5) ausgebildet ist nach einem der Ansprüche 9 bis 12.
